# EUROPEAN PATENT APPLICATION

(11) **EP 4 841 447 A1**
(43) Date of publication of application: **18.11.2026**
(21) Application number: 26172450.4
(22) Date of filing: 15.04.2026
(51) Int. Cl.: G06F 11/20, G06F 13/40

(54) **MULTI-LEVEL REDUNDANCY IN DIE-TO-DIE**

(30) Priority: 16.04.2025 US 202519180362
(71) Applicant: Google LLC, Mountain View, CA 94043 (US)
(72) Inventor: CHEN, Xi, Mountain View, California, 94043 (US); CHAN, Kok-Hong, Mountain View, California, 94043 (US)
(74) Representative: Betten & Resch

(57) **Abstract**

Generally disclosed herein is an approach for separating the existing D2D physical layers (PHYs) into two or more separate data logical sub-modules while increasing the data transfer frequency of one of the separate logical sub-modules. If one of the data logical sub-modules has connectivity issues due to defective input/output (IO) cells, the other data logical sub-modules can be used to maintain the same data transfer frequency comparable to the original data transfer frequency using the entire physical layer data module as one logical module.

## Description

### BACKGROUND

As the number of interconnected dies increases to accommodate industrial demand, the likelihood of defects found in a package of dies also increases. For example, contamination of micro bumps of a die during an assembly process can lead to poor electrical connections and affect the reliability of the entire package to which the die is connected.

A D2D redundancy may generally refer to a configuration strategy in chip manufacturing where multiple redundant communication modules are built between separate silicon dies within a single package such that transmission may continue even if one of the existing modules fails. However, D2D redundancy can lead to additional costs due to an increase in the die size and more complicated routing.

### SUMMARY

Generally disclosed herein is an approach for separating existing D2D physical layers (PHYs) into two or more separate data logical sub-modules while increasing the data transfer frequency of one of the separate logical sub-modules. If one of the data logical sub-modules has connectivity issues due to defective input/output (IO) cells, the other data logical sub-modules can be used to maintain the same data transfer frequency comparable to the original data transfer frequency using the entire physical layer data module as one logical module.

An aspect of the disclosure provides an apparatus comprising a first die comprising a plurality of input/output (IO) cells and physical layer circuitry configured to receive data from or output the data to a second die via an interconnect, and a controller configured to select at least one of a first-level redundancy mechanism or a second-level redundancy mechanism based on a number of defective IO cells of the plurality of IO cells. The controller may be configured to select the first-level redundancy mechanism based on the number of defective IO cells being less than or equal to a predefined value and the second-level redundancy mechanism based on the number of defective IO cells exceeding the predefined value.

In some examples, the plurality of the IO cells may be divided into two or more groups.

In some examples, each group of the plurality of the IO cells may include M number of IO cells, wherein M is an integer greater than 0.

In some examples, N number of the IO cells of the M number of IO cells may be designated as redundant IO cells. N is an integer greater than 0 and less than M.

In some examples, the predefined value for a tolerant number of the defective IO cells may be equal to a number of redundant IO cells in each group.

In some examples, the controller may be configured to disconnect normal IO cells from defective IO cells based on selecting the first-level redundancy mechanism.

In some examples, the second-level redundancy mechanism may further include a first configuration and a second configuration.

In some examples, the controller may be configured to connect the first die to the second die via the interconnect using a first group of two groups of the IO cells for data transmission in the first configuration. The number of defective IO cells in a second group of the two groups may exceed the predefined value.

In some examples, the controller may be configured to block the second group from transmitting the data to the second via and increase an amount of the data output through the first group to compensate for a lost amount of data transfer due to the blocked data transmission of the second group.

In some examples, the controller may be configured to connect the first die to a first physical layer (PHY) instance of the second die and a second PHY instance of the second die, connect the first group of the IO cells to the first PHY instance of the second die, and connect the second group of the IO cells to the second PHY instance of the second die.

In some examples, the controller may be configured to block the first group from transmitting the data to the first PHY instance of the second die based on the first group of the IO cells having the number of the defective cells exceeding the predefined value.

In some examples, the controller may be configured to increase an amount of data output from the second group of the IO cells connected to the second PHY instance of the second die.

Another aspect of the disclosure provides a method for die-to-die (D2D) redundancy control. The method incudes transmitting, by a first die, data to a second die, wherein each of the first die and the second die include a plurality of input/output (IO) cells; and selecting, by one or more processors, at least one of a first-level redundancy mechanism or a second-level redundancy mechanism based on a number of defective IO cells of the plurality of IO cells, wherein the first-level redundancy mechanism is selected based on the number of defective IO cells being less than or equal to a predefined value and the second-level redundancy mechanism based on the number of defective IO cells exceeding the predefined value.

In some examples, the method may further include dividing, by the one or more processors, the plurality of the IO cells into two or more groups.

In some examples, the predefined value for a tolerant number of the defective IO cells may be equal to a number of redundant IO cells in each group.

In some examples, the method may further include disconnecting normal IO cells from the defective IO cells, by the one or more processors, based on selecting the first-level redundancy mechanism.

In some examples, the second-level redundancy mechanism may further include a first configuration and a second configuration.

In some examples, the method may further include connecting, by the one or more processors, the first die to the second die via the interconnect using a first group of two groups of the IO cells for data transmission in the first configuration.

In some examples, the method may further include increasing an amount of the data output by the first group.

Yet another aspect of the disclosure provides a non-transitory computer-readable medium comprising instructions that, when executed by one or more processors, cause the one or more processors to perform operations for controlling die-to-die (D2D) redundancy. The operations may comprise transmitting, by a first die, data to a second die, wherein each of the first die and the second die include a plurality of input/output (IO) cells, and selecting, by one or more processors, at least one of a first-level redundancy mechanism or a second-level redundancy mechanism based on a number of defective IO cells of the plurality of IO cells, wherein the first level redundancy is selected based on the number of defective IO cells being less than or equal to a predefined value and the second level redundancy mechanism based on the number of defective IO cells exceeding the predefined value.

### BRIEF DESCRIPTION OF THE DRAWINGS

FIG. 1 is a schematic representation of a portion of a x64 IO module in accordance with aspects of the disclosure.
FIG. 2 is a schematic representation of an array of 32 IO cells and two (2) redundant IO cells in accordance with aspects of the disclosure.
FIG. 3 is a schematic representation of a first-level redundancy mechanism in accordance with aspects of the disclosure.
FIG. 4 is a schematic representation of a second-level redundancy mechanism in accordance with aspects of the disclosure.
FIGS. 5A-B are block diagrams illustrating various configurations of the second-level redundancy mechanism in accordance with aspects of the disclosure.
FIG. 6 is a block diagram illustrating an example D2D redundancy controller in accordance with aspects of the disclosure.
FIG. 7 is an example flow diagram of a D2D redundancy control process in accordance with aspects of the disclosure.
FIG. 8 is an example flow diagram of a first-level redundancy process in accordance with aspects of the disclosure.
FIG. 9 is an example flow diagram of a second-level redundancy process in accordance with aspects of the disclosure.

### DETAILED DESCRIPTION

The present disclosure relates to an approach for a multi-level die-to-die (D2D) redundancy mechanism. The multi-level D2D redundancy mechanisms may include two sub-mechanisms: a first-level redundancy mechanism and a second-level redundancy mechanism. The first-redundancy mechanism may be selected when there are defective IO cells in one or more arrays of IO cells, the number of the defective IO cells being less than a predefined value. The normal IO cells located adjacent to the defective IO cells may be configured to receive data from the nearest normal IO cell using a re-routed data path to maintain a steady rate of data transmission. The second-level redundancy mechanism may be selected when there is an unavailable array of the IO cells. An array may be designated as an unavailable array when the number of the defective IO cells exceeds the predefined value. The unavailable array can be blocked from transmitting data to a second die. Other arrays may be selected to transmit data to the second die without using the unavailable array. The frequency of the data output to the second die using the available array may be increased to compensate for the loss of the amount of the data supposedly transferred from the unavailable array., This approach can reduce the need for an additional die, thereby decreasing the total number of dies required.

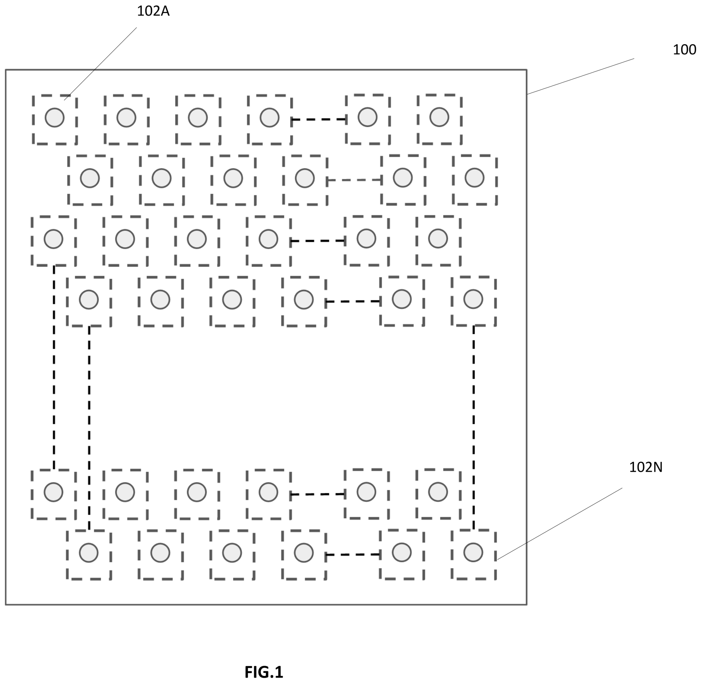

FIG. 1 is a schematic representation of a portion of a x64 IO module 100. IO modules may refer to a device that acts as a connective bridge between a computer system and other systems such as sensors, actuators, and other peripherals. IO module 100 has numerous IO cells 102A- N. If an IO module includes 64 IO cells, it can be indicated as an x64 IO module. It is to be understood that IO module 100 may include any number of IO cells other than 64 IO cells. Each circle in each IO cell is a micro-bump connected to an integrated circuit (IC) package, and the rectangle surrounding the micro-bump is an IO circuit fabricated on silicon. IO cells 102A-N may act as D2D PHYs. A D2D PHY may refer to a physical interface or communication layer that enables connecting and transmitting data between dies in a multichip system. In some examples, IO cells 102A-N may be divided into a predefined number of groups or arrays of the IO cells. For example, IO cells 102A-N may be divided into two arrays of IO cells, each including 32 IO cells. In another example, IO cells 102A-N may be divided into N numbers of arrays of the IO cells. In some examples, some arrays may include a different number of IO cells than the other arrays.

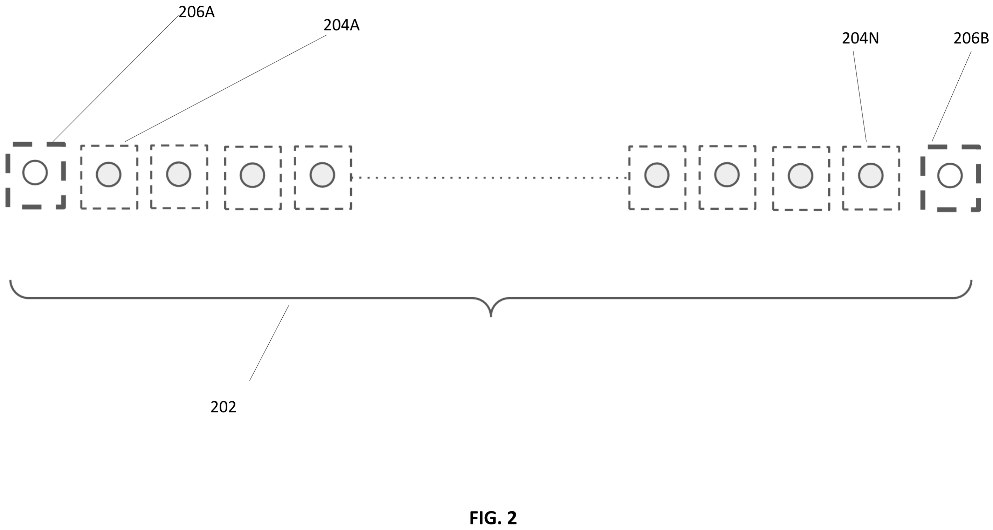

FIG. 2 is a schematic representation of an array including 32 IO cells and two (2) redundant IO cells. Array 202 may include 32 IO cells 204A-N. Array 202 may include two (2) redundant IO cells 206A-B. The redundant IO cells 206A-B will be used to replace the defective IO cells when the number of the defective IO cells in the array exceeds a predefined number. Each IO module may have multiple arrays of IO cells. For example, IO module 100, as depicted in FIG. 1, may include 64 IO cells. IO module 100 may be configured to have two arrays of 32 IO cells and two (2) redundant IO cells, which totals 64 IO cells and four (4) redundant IO cells. It is to be understood that each IO module may include any other number of IO cells and redundance cells than the aforementioned numbers.

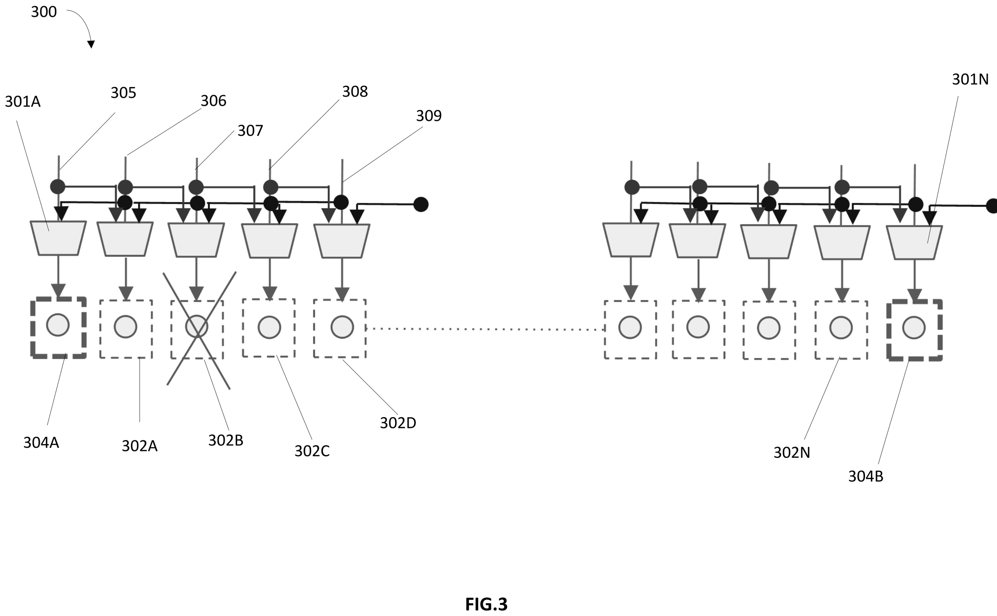

FIG. 3 is a schematic representation of a first-level redundancy mechanism. Array 300 may include IO cells 302A-N and redundancy IO cells 304A-B. Each IO cell may be connected to a respective multiplexer among multiplexers 301A-N. Each multiplexer may be connected to at least three different wires, such as wires 305, 306, and 308. When none of the IO cells 302A-N is a defective IO cell, the redundancy IO cells 304A or 304B are not activated. When there are one or more defective IO cells that require a repair, the multiplexers can be configured to re-route the incoming input data being transmitted to the defective IO cells to an IO buffer (not shown). For example, when IO cell 302B is defective, the redundancy IO cell 304A is activated. Redundancy IO cell 304A may be configured to receive input data via wire 306. When IO cell 302B is determined to be defective, IO cell 302B may be configured to no longer receive input data via wire 307. The input data originally transmitted to IO cell 302B can be transmitted to adjacent IO cell 302A using wire 307. In some examples, the amount of data to be transmitted to the defective IO cell 302B may be transmitted to IO cell 302C if the redundancy IO cell 304B is activated via wire 307. Activating either redundancy IO cell 304A or redundancy IO cell 304B may be an implementation choice.

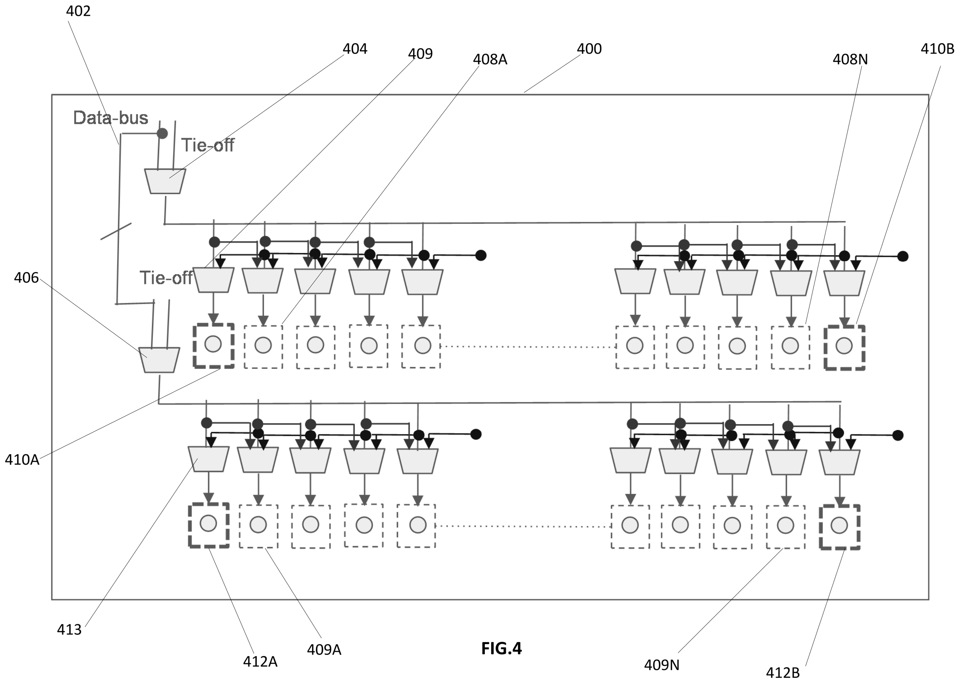

FIG. 4 is a schematic representation of a second-level redundancy mechanism. IO module 400 may include two arrays of IO cells. The first array may include IO cells 408A-N and redundant IO cells 410A-B. Each IO cell may be connected to bus 402. Each IO cell is connected to a multiplexer, such as a sub-multiplexer 409. The first array may be connected to sub-multiplexer 404, which may be configured to manage input and/or output data for the first array as a whole, while each sub-multiplexer connected to each IO cell may be configured to manage input and/or output of data at an individual IO cell level. The second array may include IO cells 409A-N and redundant IO cells 412A-B. Each IO cell of the second array may be connected to a respective sub-multiplexer, such as sub-multiplexer 413. The entire data output and/or input of the second array may be managed by sub-multiplexer 406.

Each array may have N number of redundant IO cells that can be activated when there are more than a predefined number of defective IO cells. If the number of the defective IO cells in the first array is less than N, then the first-level redundancy mechanisms may be implemented as described in connection with FIG. 3 above. If the number of the defective IO cells in the array exceeds N, then multiplexer 404 connected to the first array may be configured to block the IO cells in the first array by clock gating, such that no data can be input and/or output through the IO cells of the first array. In this case, only the IO cells in the second array may be used to transmit the data. To make up for the loss of the data transfer that was performed by the IO cells of the first array, multiplexer 406 may be configured to increase the data transfer frequency of the IO cells of the second array.

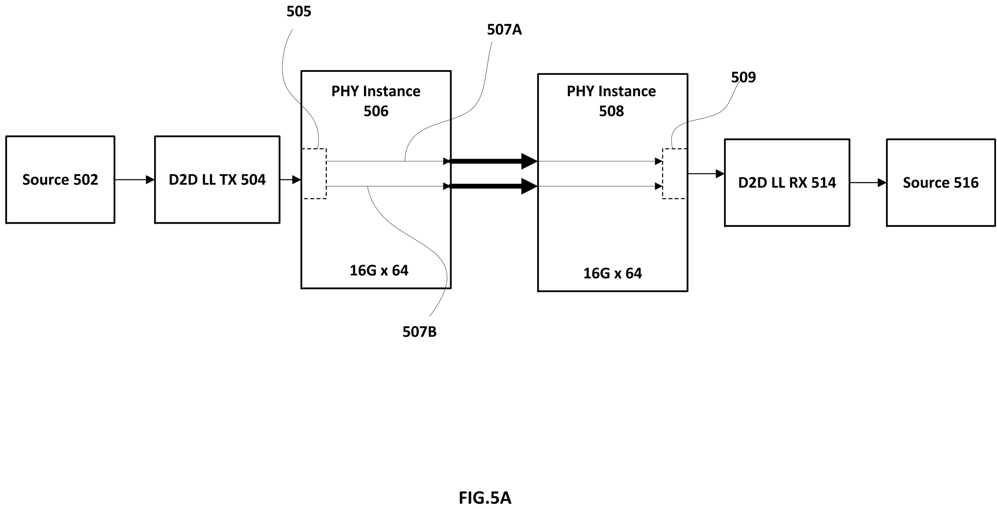

FIGS. 5A-B are block diagrams illustrating various configurations of the second-level redundancy mechanism. When a D2D redundancy control system is configured to use the second-level redundancy mechanism, the system may be configured to select either a first configuration or a second configuration. The first configuration may involve two identical D2D PHYs connections from a PHY instance of the first die to a PHY instance of the second die. The second configuration may involve a single D2D PHY connection from a PHY instance of the first die to PHY instance 510 and PHY instance 512 of the second die when the number of the defective cells in one of the two or more arrays exceed the number of the redundant IO cells in the array or any predefined number.

Referring to FIG. 5A, PHY instance 506 of the first die may be configured to receive incoming data from source 502 via D2D link layer (LL) transmitter (TX) 504. Source 502 may represent incoming data from 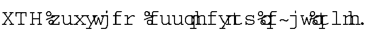 D2D LL TX 504 may refer to a data link layer configured to manage data integrity and clock crossing between source 502 and PHY instance 506. PHY instance 506 may receive the data from D2D LL TX 504 using a single logical module 505. A logical module may refer to a functionally independent unit within a die, which can be configured to perform a specific task. In this example, a single logical module 505 can transmit the received data to PHY instance508 of the second die using two arrays of IO cells indicated by arrows 507A and 507B, respectively. Each array may include 32 IO cells and two (2) redundant IO cells and any combination thereof. In other examples, each array may include any number of IO cells and redundant IO cells. When the number of the defective IO cells in the first array 507A exceeds the number of the redundant cells, the logical module 505 may be configured to block the first array 507A from transmitting the data to PHY instance 508. The frequency of the data transfer of the second array 507B may be increased to compensate for the amount of the data that the first array 507A was originally assigned to transmit. PHY instance508 may be configured to receive the data that PHY instance 506 received from source 502 only via the second array 507B. Logical module 509 within PHY instance 508 may be assigned to receive the data transmitted from the second array 507B. Logical module 509 may be configured to transmit the received data to source 516 via D2D link layer (LL) Receiver (RX) 514.

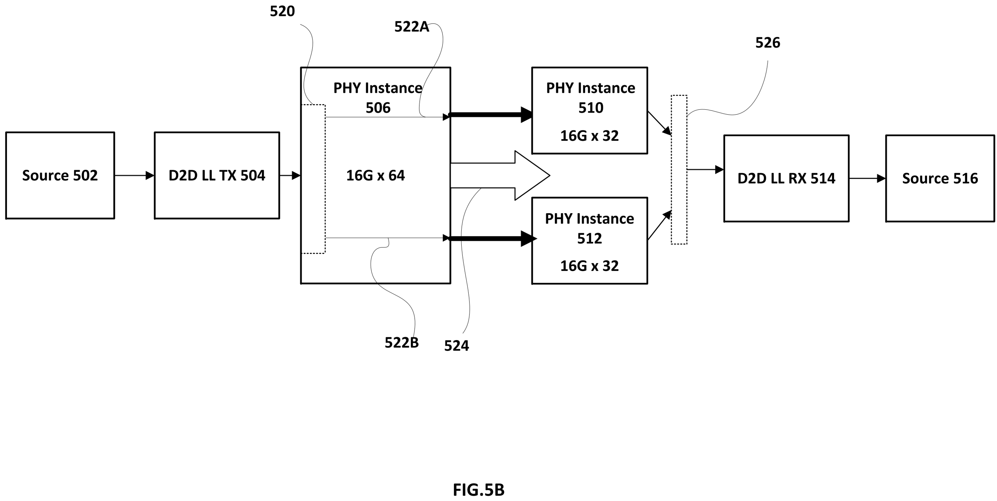

Referring to FIG. 5B, PHY instance 506 may receive data from source 502 via D2D LL TX 504. PHY instance 506 may be configured to receive source 502 using logical module 520. Logical module 520 may have two arrays of IO cells: 522A and 522B. When the number of the defective cells in the first array 522A exceeds the number of the redundant IO cells, logical module 520 may be configured to send data only using the second array 522B. PHY instance 510 may be connected to PHY instance 506, but since the first array 522A is blocked from transmitting the data to PHY instance 510, only PHY instance 512 may receive data from PHY instance 506 using the second array 522B. PHY instance 510 and PHY instance 512 may be PHY instances of the same die. The combined size of PHY instance 510 and PHY instance 512 may equal the size of PHY instance 506. Logical module 526 may represent a combination of logical modules inside PHY instance 510 and PHY instance 512 (not shown individually). Logical module 526 may transmit the data that PHY instance512 received from die 506 to source 516 via D2D LL RX 514.

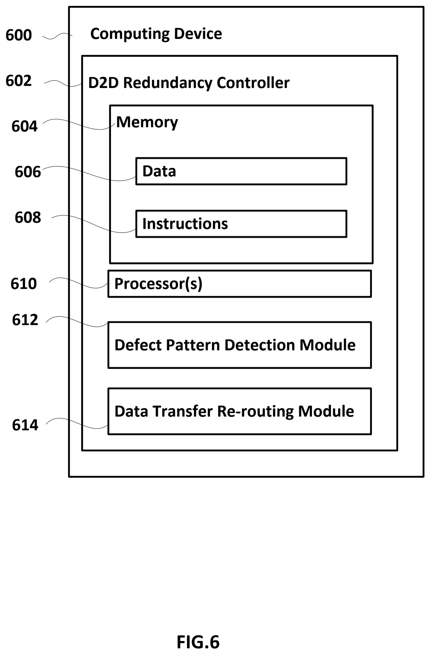

FIG. 6 is a block diagram illustrating an example D2D redundancy controller embedded in a computer device 600. The computing device 600 can take on a variety of configurations, such as a controller or microcontroller, or a processor, such as a CPU, a GPU, or an ASIC, including a tensor processing unit (TPU). The computing device may further include a D2D redundancy controller 602. D2D redundancy controller 602 may be configured to detect defective IO cells and determine the status of each array of IO cells. D2D redundancy controller 602 may also be configured to re-route the wires connected between each IO cell when a defective IO cell needs to be blocked from receiving and/or transmitting data to other IO cells.

D2D redundancy controller 602 may include a processor 610, memory 604 including data 606 and instructions 608, defect pattern detection module 612, and data transfer re-routing module 614, as well as other components typically present in server computing devices. In other examples, such operations may be performed by one or more of the computing devices in a data center or elsewhere.

The memory 604 can store information accessible by the processor 610, including instructions 608 that can be executed by the processor 610. Memory can also include data 606 that can be retrieved, manipulated, or stored by the processor 610. Memory 604 may be a type of non-transitory computer-readable medium capable of storing information accessible by the processor 610, such as a hard drive, solid-state drive, tape drive, optical storage, memory card, ROM, RAM, DVD, CD-ROM, write-capable, and read-only memories. The processor 610 can be a well-known processor or other lesser-known types of processors. Alternatively, the processor 610 can be a dedicated controller, such as an ASIC.

The instructions 608 can be a set of instructions executed directly, such as machine code, or indirectly, such as scripts, by the processor 610. In this regard, the terms "instructions"," "steps," and "programs" can be used interchangeably herein. The instructions 608 can be stored in object code format for direct processing by the processor 610, or other types of computer language including scripts or collections of independent source code modules that are interpreted on demand or compiled in advance. For example, instructions 608 may include instructions for logical modules 505 and 509 depicted in FIG.5A, to determine which array of IO cells is feasible to transmit the data to another die.

Data 606 can be retrieved, stored, or modified by the processor 610 in accordance with instructions 608. For instance, although the system and method are not limited by a particular data structure, data 606 can be stored in computer registers, in a relational database as a table having a plurality of different fields and records, or in XML documents. Data 606 can also be formatted in a computer-readable format such as, but not limited to, binary values, ASCII, or Unicode. Moreover, data 606 can include information sufficient to identify relevant information, such as numbers, descriptive text, proprietary codes, pointers, references to data stored in other memories, including other network locations, or information that is used by a function to calculate relevant data. Data 606 can include historical data pertaining to the abnormality of each IO cell in each array. Additionally, or alternatively, data 606 may include test data obtained from experiments performed on IO cells for connectivity tests.

Defect pattern detection module 612 may be configured to command a link layer, such as D2D LL TX 504, as depicted in FIG. 5A, to determine the status of connectivity of each IO cell. If the link layer determines that there is a non-repairable IO cell in an array, defect pattern detection module 612 may be configured to communicate with data transfer re-routing module 614 to adjust data interface and select a normal array of the IO cells to transmit data to another die. Data transfer re-routing module 614 may be configured to re-route the wires for data transfer to any defective IO cells, such that the defective IO cells are blocked from transmitting data to normal IO cells. When the defective IO cells are repaired, defect pattern detection module 612 may be configured to perform the connectivity test on the IO cells, and if the defective IO cells are repaired, data transfer re-routing module 614 may be configured to reinstate the blocked wires.

FIG. 6 functionally illustrates processor 610 and memory 604 as being within the same block, but processor 610 and memory 604 may instead include multiple processors and memories that may or may not be stored within the same physical housing. For example, some of the instructions 608 and data 606 may be stored on a removable CD-ROM and others may be within a read-only computer chip. Some or all of the instructions and data can be stored in a location physically remote from, yet still accessible by, the processor 610. Similarly, the processor 610 can include a collection of processors, which may or may not operate in parallel.

It is to be appreciated that in this example, defect pattern detection module 612 and data transfer re-routing module 614 are shown as part of D2D redundancy controller 602. In other examples, defect pattern detection module 612 and data transfer re-routing module 614 may be implemented in one or more other systems or computing devices.

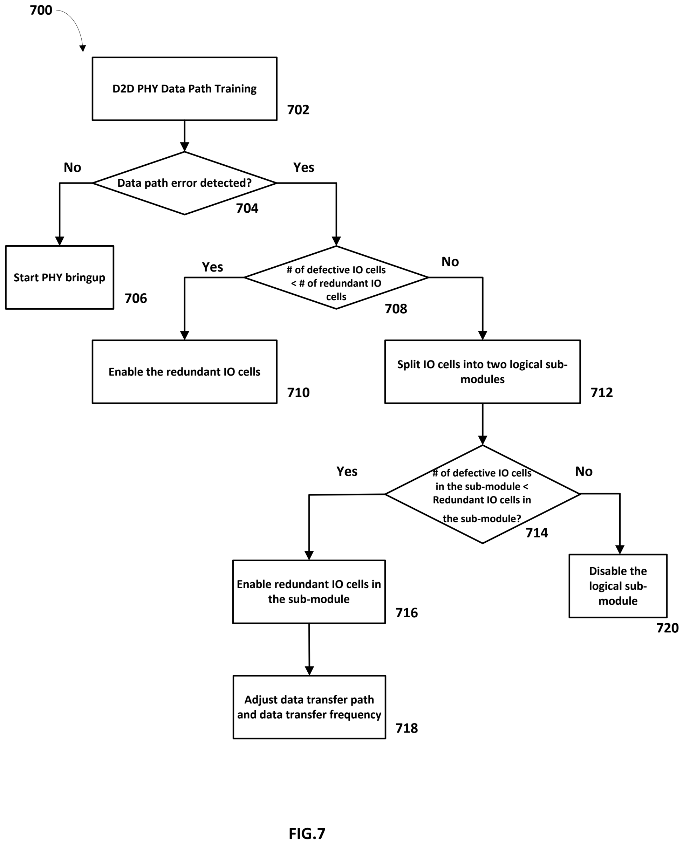

FIG. 7 is an example flow diagram of a D2D redundancy control process. According to block 702, a D2D redundancy controller ("controller") such as D2D redundancy controller 602 as depicted in FIG. 6 may be configured to manage a die's D2D PHY data path. The controller may be configured to test a plurality of data paths between two or more dies by monitoring for any degradation in signal integrity and/or power integrity between the dies.

According to block 704, the controller may be configured to determine whether a data path error is detected. The controller may be configured to determine that the data path is corrupted due to defective IO cells when the controller detects the degradation in the signal integrity and/or power integrity in the data path falling below a threshold value. If no error is detected, the controller may configure the PHY data path to receive and/or transmit data at block 706. If a data path error is detected, the controller may be configured to determine whether the number of defective IO cells in a particular array of the IO cells included in the defective data path is less than the number of redundant IO cells in the same array at block 708.

According to block 706, the controller may be configured to activate the tested PHY data path such that the die may receive data from or transmit data to another die. The PHY data path may include an array of IO cells as illustrated in FIG. 2. The array of IO cells may include N number of redundant IO cells that remain inactive when there are no defective IO cells in the array.

According to block 708, the controller may be configured to determine whether the number of the defective IO cells in the defective data path is less than the number of the redundant IO cells. The controller may be configured to determine which IO cells in the defective data path are defective based on performing an individualized power and/or signal integrity test on each IO cell in the defective data path. If the number of the defective IO cells in the defective data path is less than the number of the redundant IO cells, the controller may be configured to activate one or more of the redundant IO cells at block 710. If the number of the defective IO cells in the defective data path exceeds the number of the redundant IO cells, the controller may be configured to split the entire group of IO cells into two logical sub-modules at block 712.

According to block 710, the controller may be configured to activate one or more of the redundant IO cells to compensate for the data transfer loss caused by the defective IO cells. The wires connected to the defective IO cells may be inactivated, and the IO cells that originally received data from the defective IO cells can now be configured to receive the data from the activated redundant IO cells.

According to block 712, the controller may be configured to split the IO cells into two or more logical sub-modules. The terms logical sub-modules and arrays of IO cells may be used interchangeably. The IO cells may be split into two logical sub-modules with equal numbers of the IO cells and the redundant cells. For example, as depicted in FIG.4, each logical sub-module may include 32 IO cells and two (2) redundant cells.

According to block 714, the controller may be configured to determine whether the number of the defective IO cells in the logical sub-module is less than the number of redundant IO cells in the logical sub-module. The controller may be configured to receive a known pattern from the IO cells. For example, the controller may send 8 bits to 8 IOs. If 4 bits are corrupted at a single transfer cycle, then the controller may determine that 4 IOs are defective. If there are two (2) redundant IO cells, the controller can be configured to compare the number of error bits against the redundant IO cells If the number of the defective IO cells in the logical sub-module is less than the number of redundant IO cells in the logical sub-module, then one or more of the redundant IO cells in the logical sub-module may be activated at block 716. If the number of the defective IO cells in the logical sub-module exceeds the number of redundant IO cells in the logical sub-module, the logical sub-module may be disabled at block 720.

According to block 716, the controller may be configured to enable one or more of the redundant IO cells in the logical sub-module. For example, if the first logical sub-module includes a defective IO cell and there are two (2) redundant IO cells in the logical sub-module, one of the two redundant IO cells in the logical sub-module is activated to compensate for the data transfer loss due to the defective IO cells.

According to block 718, the controller may be configured to adjust the data transfer frequency of the data transfer path. If a second logical sub-module is blocked, the data transfer path may be re-routed to the first logical sub-module, such that the data may be transmitted to other dies only via the first logical sub-module. The data transfer frequency of the first logical sub-module may be increased to compensate for the loss of the data transfer via the second logical sub-module. For example, the data transfer frequency may be increased based on increasing the clock frequency by re-programing the on-chin Phase Locked Loop (PLL) circuit.

According to block 720, the controller may be configured to disable the logical sub-module with the number of the defective IO cells exceeding the redundant IO cells. For example, if the number of the defective IO cells in the second logical sub-module exceeds the number of the redundant IO cells within the second logical sub-module, the data transfer path of the second logical module may be blocked. The data path will be re-routed to the first logical sub-module, and the data will be transmitted through the first logical sub-module to other dies.

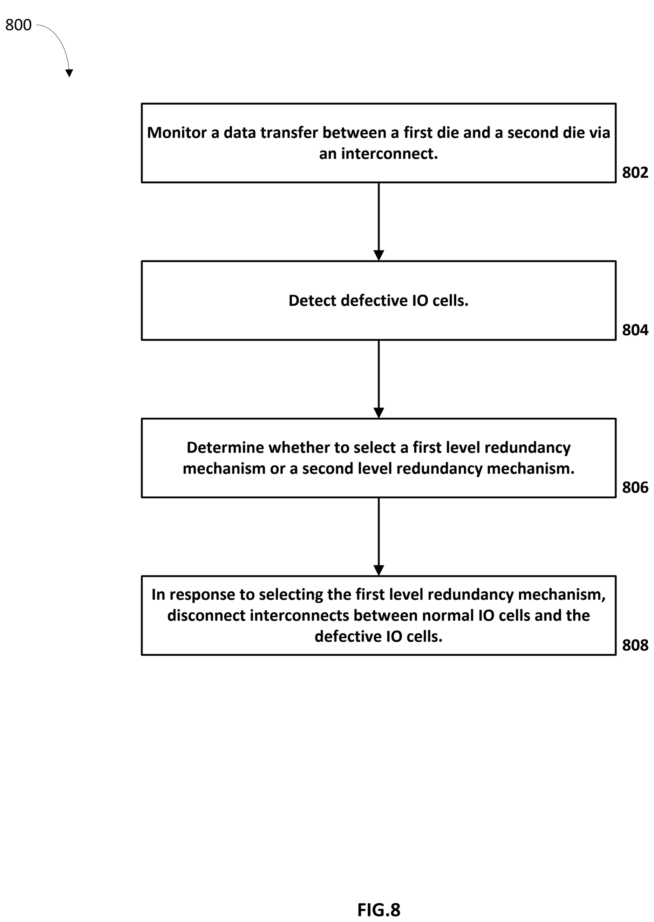

FIG. 8 is an example flow diagram of the first-level redundancy process. According to block 802, the controller is configured to monitor a data transfer between a first die and a second die via an interconnect. If any data path indicates degradation of data transfer frequency or data integrity, the controller may determine that there are one or more defective IO cells in the dies.

According to block 804, the controller is configured to detect defective IO cells. The controller may be configured to determine which IO cells in which array of the IO cells are defective. The IO cells may be divided into two or more arrays with an equal number of IO cells and redundant IO cells.

According to block 806, the controller is configured to select either a first-level redundancy mechanism or a second-level redundancy mechanism based on the number of the defective IO cells in each array. For example, if one of the arrays has three (3) defective IO cells and there are only two (2) redundant IO cells to compensate for the data transfer loss, the controller may be configured to disable the array. If the array has only one (1) defective IO cell, the controller may be configured to select a first-level redundancy mechanism. The first level redundancy mechanism may refer to a mechanism where one or more redundant cells are activated to replace the defective IO cells within the same array.

According to block 808, in response to selecting the first-level redundancy, the controller is configured to disconnect the interconnect between the normal IO cells and defective IO cells. The controller may be configured to re-route the data path connected to the normal IO cells, such that the IO cells may receive the data from the other normal IO cells, which are not connected to the defective IO cells.

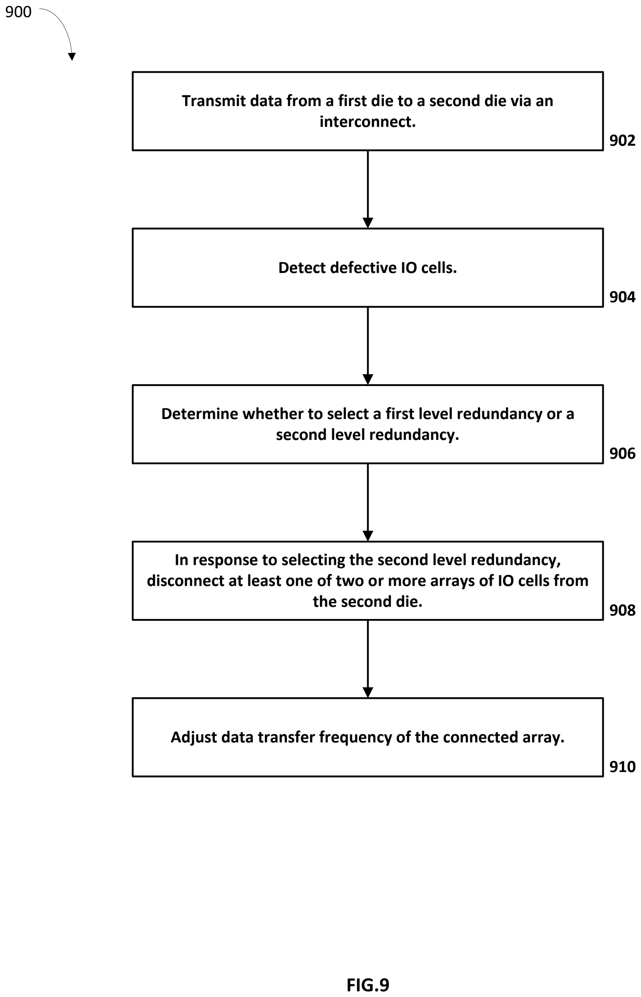

FIG. 9 is an example flow diagram of the second-level redundancy process. According to block 902, the controller is configured to transmit data from a first die to a second die via an interconnect. As described in connection with block 802, the controller may be configured to monitor the data transfer between the first die and the second die. The controller may be configured to detect degradation of data transfer frequency or data integrity. According to block 904, the controller is configured to detect defective IO cells. The controller may be configured to determine how many IO cells are defective in each array of the IO cells.

According to block 906, the controller is configured to determine whether to select a first-level redundancy mechanism or a second-level redundancy mechanism. The controller may be configured to select the second-level redundancy mechanism when the number of defective IO cells in one of the arrays exceeds a preconfigured value. If the number of the defective IO cells exceeds the preconfigured number, the controller may be configured to determine that an insufficient amount of data will be transferred from the first die to the second die.

According to block 908, the controller is configured to, in response to selecting the second-level redundancy mechanism, disconnect the array including the defective IO cells from the second die, such that the second die can no longer receive the data from the first die using the array including the defective IO cells. The controller may be configured to adjust the data path from the array including the defective IO cells to any of the remaining arrays.

According to block 910, the controller is configured to transmit the data from the first die to the second die using any of the remaining arrays of the IO cells. The controller may be configured to increase the data transfer frequency of the remaining array of the IO cells to compensate for the amount of the data transfer loss due to the disconnected array including the defective IO cells.

The D2D redundancy control process described herein is beneficial in that it provides a robust control of data transfer paths between a first die and a second die. By increasing the data transfer frequency of one array of IO cells when another array has more than a predefined number of defective IO cells, this process can reduce the need for an additional die, thereby decreasing the total number of dies required.

In this specification, the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions that when executed by one or more computers, causes the one or more computers to perform the one or more operations.

Although the technology herein has been described with reference to particular examples, it is to be understood that these examples are merely illustrative of the principles and applications of the present technology. It is, therefore, to be understood that numerous modifications may be made and that other arrangements may be devised without departing from the spirit and scope of the present technology as defined by the appended claims.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. An apparatus comprising:
a first die comprising a plurality of input/output (IO) cells and physical layer circuitry configured to receive data from or output the data to a second die via an interconnect; and
a controller configured to select at least one of a first-level redundancy mechanism or a second-level redundancy mechanism based on a number of defective IO cells of the plurality of IO cells, wherein the controller is configured to select the first-level redundancy mechanism based on the number of defective IO cells being less than or equal to a predefined value and the second-level redundancy mechanism based on the number of defective IO cells exceeding the predefined value.

2. The apparatus of claim 1, wherein:
the plurality of the IO cells is divided into two or more groups; or
the plurality of the IO cells is divided into two or more groups and each group of the plurality of the IO cells includes M number of IO cells, wherein M is an integer greater than 0; or
the plurality of the IO cells is divided into two or more groups, each group of the plurality of the IO cells includes M number of IO cells, wherein M is an integer greater than 0, and N number of the IO cells of the M number of IO cells are designated as redundant IO cells, wherein N is an integer greater than 0 and less than M; or
the plurality of the IO cells is divided into two or more groups, each group of the plurality of the IO cells includes M number of IO cells, wherein M is an integer greater than 0, N number of the IO cells of the M number of IO cells are designated as redundant IO cells, wherein N is an integer greater than 0 and less than M, and the predefined value for a tolerant number of the defective IO cells is equal to a number of redundant IO cells in each group.

3. The apparatus of claim 1 or 2, wherein the controller is configured to disconnect normal IO cells from defective IO cells based on selecting the first-level redundancy mechanism.

4. The apparatus of any one of the preceding claims, wherein the second-level redundancy mechanism further includes a first configuration and a second configuration.

5. The apparatus of claim 4, wherein, in the first configuration, the controller is configured to connect the first die to the second die via the interconnect using a first group of two groups of the IO cells for data transmission, wherein a number of defective IO cells in a second group of the two groups exceeds the predefined value.

6. The apparatus of claim 5, wherein the controller is configured to block the second group from transmitting the data to the second die via and increase an amount of the data output through the first group to compensate for a lost amount of data transfer due to the blocked data transmission of the second group.

7. The apparatus of claim 6, wherein, in the second configuration, the controller is configured to connect the first die to a first physical layer (PHY) instance of the second die and a second PHY instance of the second die, connect the first group of the IO cells to the first PHY instance of the second die, and connect the second group of the IO cells to the second PHY instance of the second die.

8. The apparatus of claim 7, wherein the controller is configured to block the first group from transmitting the data to the first PHY instance of the second die based on the first group of the IO cells having the number of the defective cells exceeding the predefined value.

9. The apparatus of claim 8, wherein the controller is configured to increase an amount of data output from the second group of the IO cells connected to the second PHY instance of the second die.

10. A method for die-to-die (D2D) redundancy control, the method comprising:
transmitting, by a first die, data to a second die, wherein each of the first die and the second die include a plurality of input/output (IO) cells; and
selecting, by one or more processors, at least one of a first-level redundancy mechanism or a second-level redundancy mechanism based on a number of defective IO cells of the plurality of IO cells, wherein the first-level redundancy mechanism is selected based on the number of defective IO cells being less than or equal to a predefined value and the second-level redundancy mechanism based on the number of defective IO cells exceeding the predefined value.

11. The method of claim 10, wherein:
the method further comprises dividing, by the one or more processors, the plurality of the IO cells into two or more groups; or
the method further comprises dividing, by the one or more processors, the plurality of the IO cells into two or more groups and the predefined value for a tolerant number of the defective IO cells is equal to a number of redundant IO cells in each group.

12. The method of claim 10 or 11, further comprising disconnecting normal IO cells from the defective IO cells, by the one or more processors, based on selecting the first-level redundancy mechanism.

13. The method of any one of the preceding claims 10 to 12, wherein:
the second-level redundancy mechanism further includes a first configuration and a second configuration; or
the second-level redundancy mechanism further includes a first configuration and a second configuration and the method further comprises, in the first configuration, connecting, by the one or more processors, the first die to the second die via the interconnect using a first group of two groups of the IO cells for data transmission; or
the second-level redundancy mechanism further includes a first configuration and a second configuration, and the method further comprises: in the first configuration, connecting, by the one or more processors, the first die to the second die via the interconnect using a first group of two groups of the IO cells for data transmission, and increasing an amount of the data output by the first group.

14. A non-transitory computer-readable medium comprising instructions that, when executed by one or more processors, cause the one or more processors to perform the method of one of claims 10 to 13.

15. A computer program comprising instructions that, when executed by one or more processors, cause the one or more processors to perform the method of one of claims 10 to 13.
